# EUROPEAN PATENT SPECIFICATION

(11) **EP 3 434 479 B1**
(45) Date of publication and mention of the grant of the patent: **24.02.2021**
(21) Application number: 17183898.0
(22) Date of filing: 29.07.2017
(51) Int. Cl.: B33Y 30/00, B29C 64/20, B29C 64/25, B28B 1/00, B22F 3/105

(54) **ADDITIVE MANUFACTURING DEVICE COMPRISING A HEAT TRANSFER OPTIMIZATION**
ADDITIVE HERSTELLUNGSVORRICHTUNG MIT WÄRMEAUSTAUSCHOPTIMIERUNG
DISPOSITIF DE FABRICATION ADDITIVE AVEC UNE OPTIMISATION D'ÉCHANGE DE CHALEUR

(43) Date of publication of application: 30.01.2019
(73) Proprietor: Sintratec AG, 5200 Brugg (CH)
(72) Inventor: von Burg, Christian, 9052 Niederteufen (CH)
(74) Representative: Herrmann, Johanna

(56) References cited:
- EP-A2- 1 704 989
- WO-A1-92/08566
- WO-A1-92/08592
- WO-A1-2016/202753

## Description

The invention relates to an additive manufacturing device comprising a heat transfer optimization. Such an additive manufacturing device can be used for the processing of a raw material such as a powder in an additive manufacturing method.

Additive manufacturing methods and the corresponding additive manufacturing devices have been in use for a number of years. In particular, laser sintering is used for additive manufacturing to obtain articles of increased strength on the basis of powder materials.

If an optimization of quality of the manufactured article is desired, one possible route of optimization includes the optimization of the manufacturing process. In particular, the temperature of the raw material in the raw material container should be substantially the same at least in the layer which is used as the building layer.

That means that in any location of the raw material container, the temperature of the raw material should be substantially the same at least for the uppermost raw material layer.

The raw material container of the additive manufacturing device is usually open and thus is exposed to different temperature surroundings. The advantage of an open raw material container lies in the fact that the supply of raw material to the raw material container doesn't present any difficulties. The supply of raw material may not only be achieved by a raw material container involving a stepwise rise of the bottom surface to supply the raw material to be distributed by the raw material distributor to provide each uppermost layer but also by a feed hopper arranged above the raw material feed such as disclosed in some embodiments of EP1600282 A1. A laser sintering method for manufacturing a free-form solid article with an additive manufacturing device has been disclosed for example in WO9208566A1 or EP1704 989 A2. Such a laser sintering method, if applied in an additive manner, is used for manufacturing the free-form solid article layer-by-layer.

Therefore, it is an object of the invention to ensure that the temperature at least in the uppermost layer is substantially uniform, in particular the temperature in the uppermost layer should be substantially the same.

It is a further object of the invention to provide a device for providing a solid article of increased coherence and strength manufactured by an additive manufacturing method. In particular, it is an object of the invention to provide an additive manufacturing device and an additive manufacturing method for obtaining an article of increased strength.

A temperature homogenization box for an additive manufacturing device comprises a wall which delimits a channel formed by the wall, whereby the wall has a first wall edge and a second wall edge. The second wall edge is arranged oppositely to a raw material surface. The temperature homogenization box can be configured to receive a heat source or can be arranged next to a heat source. The heat source can be disposed inside the channel. The heat generated by the heat source is transferred to the cross-sectional area delimited by the second wall edges in such a way that a homogeneous temperature distribution in this cross-sectional area is obtained. The homogeneous temperature distribution is also transferred to any cross-sectional surfaces arranged below the second wall edges. A raw material exposed to the heat generated inside the wall edges has a homogeneous temperature distribution on the raw material surface. The raw material surface is thus heated in a homogeneous manner over the cross-sectional surface corresponding to cross-sectional area of the box wall edges. The difference between the maximal temperature in the cross-sectional area and the minimal temperature in the cross-sectional area is not more than 15 degrees Celsius.

An additive manufacturing device comprises an energy beam generation unit, a heat source and a raw material container containing a raw material. The raw material has a raw material surface exposed to an energy beam to be emitted by the energy beam generation unit in operation. The heat source includes a heating surface for heating the raw material surface to form a pre-heated raw material surface. The energy beam generation unit is disposed with a directing unit to direct the energy beam onto the pre-heated raw material surface. The path of the energy beam can be generated according to a computer-generated model of the solid article stored in a storage unit associated with a control unit. The pre-heated raw material surface forms the upper surface of an uppermost layer of raw material. The uppermost layer of raw material is transformed into a coherent structure at the spots of the pre-heated raw material surface exposed to the energy beam. The pre-heated raw material surface forms the upper surface of an uppermost layer of raw material. The uppermost layer of material is applied on the bottom surface of the raw material container if the uppermost layer is the first layer or top of the raw material already present in the raw material container from previous raw material application steps as the second or subsequent layer. The coherent structure matches a structure formed in the layer below the uppermost layer if the uppermost layer is not the only layer. The solid article is formable by the coherent structure formed in a plurality layers of raw material including the uppermost layer of raw material. During each step of exposure of the uppermost layer of raw material to the energy beam, coherent substructures are formed in each layer which is the uppermost layer at the time. The coherent sub-structures of neighboring layers are interconnected so as to form a coherent structure forming at least a portion of the solid article. New layers of raw material are placed on top of the raw material layers containing a coherent structure so as to place a further coherent sub-structure on top of the coherent structure until the entire solid article is formed. A temperature homogenization box is arranged between the energy beam generation unit and the raw material container when the additive manufacturing device is in operation. The heat source can be arranged between the energy beam generation unit and the raw material container.

The beam can be any type of beam capable of transporting energy to change the temperature of the raw material surface in a way that it alters its composition, for instance by performing a chemical reaction or by at least partially melting the particles of a powder, e.g. by sintering. Thus, the beam is an energy transporting beam, i.e. an energy beam. In particular, the beam comprises a laser beam. The cross-sectional surface of the channel can correspond to the cross-sectional surface of the raw material container. Thereby the cross-sectional surfaces of the channel and the raw material container match, which allows for an optimized and uniform heat transfer from the channel to the raw material surface.

According to an embodiment the temperature homogenization box comprises a wall which delimits a channel such that the channel is at least partially enclosed laterally by the wall. In particular, the channel can be hollow, thus the channel is free from insert elements. Such insert elements can include any part selected from the group of baffles, louvers, guide elements, separation elements, shadow-generating elements. In particular, no insert elements are arranged in the channel. In particular, no shadow-generating elements are arranged in the channel. If the channel is hollow, the path for the energy beam is not obstructed by any insert element. The heat flow can be particularly uniform as the surface of the channel walls is homogeneous if it is free from any insert elements. In particular, the cross-sectional surface of the channel can be constant. In particular, the cross-sectional surface of the first wall edge can be substantially the same as the cross-sectional surface of the second wall edge.

The wall can comprise a black inner wall surface to increase heat absorption effects. A black inner wall surface also prevents contaminations from becoming apparent rapidly. A black inner wall surface is thus least less susceptible to any perception of a degradation of the additive manufacturing device caused by contaminants.

The additive manufacturing device comprises a housing, whereby the temperature homogenization box is attachable to the housing. In particular, the housing can comprise a door, whereby the temperature homogenization box is attachable to the door. The temperature homogenization box can include an attachment element, such as a hook. The attachment element is suitable for attaching the temperature homogenization box removably or permanently to the housing, in particular the housing wall, which can be a portion of a door.

According to an embodiment, the wall has a first wall edge and a second wall edge, whereby in the operative state, the second wall edge is configured to face a raw material surface of a raw material container.

According to an embodiment, the temperature homogenization box is configured to receive the heat source whereby the heat generated by the heat source is transferred to the cross-sectional area delimited by the second wall edges in such a way that a homogeneous temperature distribution in the cross-sectional area is obtained. By arranging the heat source on top of or inside the temperature homogenization box, the heat can be directed precisely onto the raw material surface. The distance between the second wall edge and the raw material surface is to be kept as small as possible whereby the homogeneous temperature distribution in the cross-sectional area which is delimited by the second wall edge can be transferred directly onto the raw material surface. The difference between the maximal temperature in the cross-sectional area and the minimal temperature in the cross-sectional area is not more than 15 degrees Celsius in a preferred configuration.

According to an embodiment, the temperature homogenization box is arranged between the heat source and the raw material container. This embodiment allows for a particular simple and light-weight construction of the temperature homogenization box.

The homogeneous temperature distribution obtained in the cross-sectional area delimited by the second wall edge is consequently according to these embodiments also transferred to the cross-sectional surfaces arranged below the second wall edge, such that the raw material surface exposed to the heat generated or transmitted inside the wall through the channel results in a homogeneous temperature distribution on the raw material surface. The raw material surface is thus heated in a homogeneous manner on the cross-sectional surface temperature on the cross-sectional surface advantageously amounts to not more than 15 degrees Celsius.

According to an embodiment, at least one of the walls of the temperature homogenization box comprises an aperture. The aperture can be used as a viewing window. The aperture can be configured as a plurality of holes or slit-like openings. The apertures can be covered by a transparent layer, e.g. a foil or a glass plate to prevent air passing through the apertures.

According to an embodiment at least one of the walls of the temperature homogenization box is disposed with a wing element. The wing element is according to an embodiment configured as a plate element. The plate element can be arranged in a substantially horizontal direction substantially parallel to the raw material surface. The wing element is arranged in such a way that it covers not only the raw material surface of raw material chamber but also the raw material supply container of the additive manufacturing device. According to an embodiment the wing element can comprise a heat source. The heat source can be arranged above the raw material supply container or the raw material chamber. The raw material can according to this embodiment be pre-heated before being transferred to the raw material container.

At least one of the walls of the temperature homogenization box can be disposed with a sealing element. The sealing element is configured to provide a seal to seal the gap between the housing of the additive manufacturing device and the temperature homogenization box wall, so as to prevent air passing from a space above the wing element or outside of the box wall to the space containing the raw material container, the raw material supply container and the raw material chamber.

According to an embodiment, the temperature homogenization box comprises an insulation. In particular, the wall can be provided with an insulation.

According to an embodiment, the wall can comprise a heating element. By means of the heating element, the wall can be heated and consequently the space in the channel is heated. The heating element can be a portion of the heat source or can be connected to the heat source. The heating element can be configured as a wall heating element.

According to an embodiment, an inner wall can be arranged inside the wall of the temperature homogenization box. The inner wall and the wall can be arranged at a distance. If the temperature homogenization box comprises an inner wall, an insulation can be provided between the wall and the inner wall. The insulation can include an insulating material can be disposed between the inner wall and the wall. Alternatively, the space between the wall and the inner wall can contain a gas such as air. Alternatively, the space between the wall and the inner wall can be evacuated. A particular advantage of this embodiment lies in the reduction of heat loss across the wall of the temperature homogenization box.

According to an embodiment, the distance between the raw material surface and the heating surface can be reduced, thereby reducing the required thermal input. Thus, for such an embodiment, the heating surface can be in contact with the raw material surface at least during the period of operation of the beam for creation of the solid article. According to an embodiment, a space is foreseen between the raw material surface and the heating surface. The volume of this space is defined by the raw material surface and the distance between the raw material surface and the heating surface. The volume can correspond to a cylinder, if the raw material surface is circular or can correspond to one of a cube, a pyramid, a prism, if the raw material surface is of rectangular shape.

The distance between the raw material surface and the heating surface can correspond to at least the thickness of the uppermost raw material layer at least during the period of recreation of a subsequent uppermost raw material layer. The distance between the raw material surface and the heating surface can correspond to at most 20 cm. Advantageously, the distance between the raw material surface and the heating surface corresponds to at most 5 cm. According to this embodiment, a raw material distribution unit may be arranged or may be passed between the uppermost raw material layer and the heating surface for distribution of the raw material for the subsequent raw material layer. The smaller the distance between the raw material surface and the heating device the better the heat transfer can be controlled. The smaller the overall volume becomes, the faster the space between the heating surface and the raw material surface can be heated. Therefore, the energy consumption can be considerably reduced. This synergistic effect of the distribution of the heat generated by the beam and the sintering process may lead to an unexpected decrease in energy consumption with respect to prior art additive manufacturing devices.

According to an embodiment, the heating surface is movable such that the distance between the heating surface and the raw material surface of the uppermost raw material layer differs during the period of exposition to the energy beam from the period of addition of a new raw material surface layer becoming the new uppermost raw material layer. Thereby a more uniform distribution of the heat is possible, such that the raw material surface can be preheated evenly. Thereby any hot spots in any particular area of the raw material surface can be avoided.

In particular, the heating surface may be moved towards the raw material surface prior or during operation of the beam and the heating surface may be moved away from the raw material surface after the exposition of the raw material surface to the beam or before the exposition of the raw material surface to the beam. Thus, the heating surface can be arranged at a first distance to the raw material surface during operation of the beam and the heating surface can be arranged at a second distance to the raw material surface after the exposition of the raw material surface to the beam or before the exposition of the raw material surface to the beam, whereby the first distance is less than the second distance. The first distance is smaller than the second distance.

The additive manufacturing device can be one of a laser sintering device, a laser melting device, a mask sintering device, a drop-on powder device, a drop on bed device, a stereolithographic device.

For the beam to be transmitted through the heating surface of the heating device, at least a portion of the heating surface can have a transmittance for the beam. In other word, in an embodiment, at least a portion of the heating surface is transmissible for the beam.

Advantageously the wavelength can be in the range from ultraviolet light to far infra-red light, thus from about 100 nm up to and including 1 mm of wavelength. Ultraviolet light thereby lies in a range of less than 100 nm up to and including about 380 nm of wavelength. Far infra-red light thereby lies in a range of about 30 µm up to and including about 1 mm of wavelength.

According to an embodiment the wavelength can be in the range from visible light to mid-infra-red light, thus from about 400 nm up to and including 30 µm of wavelength. Visible light thereby lies in a range of less than 400 nm up to and including about 750 nm of wavelength. Mid-infra-red light thereby lies in a range of more than 3 µm up to and including about 30 µm of wavelength. In this range, a CO₂ laser can advantageously be employed.

According to a preferred embodiment the wavelength can be in the range from visible light to near-infra-red light, thus from less than about 400 nm up to and including 3 µm of wavelength. Visible light thereby lies in a range of less than 400 nm up to and including about 750 nm of wavelength. Near-infra-red light thereby lies in a range of more than 750 nm up to and including about 3 µm of wavelength.

According to a particularly preferred embodiment the wavelength can be in the range of 100 nm up to and including 3 µm of wavelength.

According to a particularly preferred embodiment the wavelength can be in the range of about 100 nm up to and including 900 nm of wavelength.

According to an embodiment, the heating surface is transparent for a beam in particular of a diode laser. In particular, the heating surface is transparent for light of a wavelength in the range of 300 nm up to and including 1100 nm, preferably of a wavelength in the rage of 400 up to and including 950 nm, particularly in a preferred range of 445 nm up to and including 808 nm. An advantage to use a laser in the visible spectrum is that it makes optical adjustments during the additive manufacturing process safer. Conveniently a diode laser can be used, which can comprise a semiconductor based on any one of the following base compounds: AIN, GaN, SiC, InN, BeSe, ZnS, MgS, MgSe, BeTe, ZnSe, AIP, GaP, AlAs, ZnTe, CdSe, GaAs, InP, Si, Ge or combinations of these materials, such as InGaAlP, GaAIAs, InGaAs, InGaAsP. In particular, a blue laser can be used. The power of the laser can be conveniently in a range of 0.1 W up to 100 W. Advantageously, a laser operating in the blue range of the spectrum is used. According to a particularly preferred example, one or more blue lasers of 2.3 W are used. Alternatively, a CO₂ laser can be used, whereby the base compound of a CO₂ laser is carbon dioxide.

According to an embodiment, the heating device is configured as a solid body, in particular as a plate element, which has a length and a width and a height, whereby the height of the heating device is smaller than the length or the width, whereby the length of the heating device corresponds at least to the length of the raw material container and the width of the heating device corresponds at least to the width of the raw material container. The length and the width of the heating device can be the same, in particular if the heating device has a quadratic cross-section or a circular cross-section in which the length and the width correspond to the diameter of the heating device. In particular, the heating device can form a cover or lid of the raw material container, whereby the raw material is enclosed in a closed space formed by the bottom and walls of the raw material container on one hand and by the heating device on the other hand. The heating surface can be in contact with the surface of the raw material. According to an embodiment, the material container can be configured as a heated material container.

According to an embodiment, the heating device can contain a heating element. The heating element can extend essentially along the circumference of the heating surface. According to a further embodiment, the heating device can contain a plurality of heating elements for heating a plurality of heating surfaces. In particular, a plurality of heating surfaces can be provided on the circumference of a centrally arranged heating surface, which has a transmittance to the beam. According to an embodiment, the heating surface can be heated by the heating element.

According to an embodiment, the heating surface can comprise a sensor element, in particular a temperature sensor element or can be a sensor element.

According to an embodiment, the distance between the heating surface and the pre-heated raw material surface can be less than 200 mm. The distance should be sufficient to accommodate a raw material distribution unit for distributing the raw material from the raw material supply container to the raw material container for generating a new layer of raw material. The raw material distribution unit can comprise one of a doctor blade, a forward rotating roller or a counter-rotating roller. The raw material can be distributed by spreading the raw material over the raw material surface of the previous layer after completion of the previous solid layer portion of the solid article.

According to an embodiment, the distance between the heating surface and the pre-heated raw material surface is less than 10 mm. Thereby the air gap between the heating surface and the raw material surface is minimized. The heating device or the raw material container can be movable to allow the raw material distribution unit to pass between the heating surface and the pre-heated raw material surface, in particular in a direction normal to the raw material surface such that when the solid article is formed by a succession of layers, the distance between the heating surface and the pre-heated raw material surface remains substantially constant. In particular, the temperature of each of the heating surfaces may vary based on temperature gradients present in the pre-heated raw material. In particular, the temperature of the heating surfaces may be higher than the temperature of the pre-heated raw material surface. Thereby the heat sink effect of the wall of the raw material container can be compensated for. By providing an independent temperature control for any of the heating surfaces, the temperature of the pre-heated raw material surface can be kept substantially constant. In particular, the variation of the temperature over the pre-heated raw material surface can be less than 4 degrees Celsius, more preferably less than 2 degrees Celsius, most preferred less than 1 degrees Celsius.

In particular, the boundary regions of the raw material, i.e. the raw material close to the wall of the raw material container tend to be colder than the core regions and the previously sintered regions tend to be hotter. For this reason, a multi-zone heating device according to the configuration as set out in the previously described embodiment can be particularly of advantage as any zone can contain individual sensors and individually controlled heating elements.

For these reasons, the distance between the heating surface and the pre-heated raw material surface in some preferred embodiments is less than 200 mm, advantageously less than 100 mm, and particularly preferred less than 10 mm. Thereby the thermal energy can be transferred substantially without losses from the heating surface to the pre-heated raw material surface.

According to an embodiment, the heating surface comprises a nonstick coating, such as a polytetrafluorethylene (PTFE). The raw material surface can be in contact with the heating surface. Thereby heat is transmitted by conduction and losses due to convective heat transfer are essentially eliminated if such a configuration is used in an embodiment.

The heating surface can contain at least one the elements of the group of a transparent conductive oxide (TCO), a network of nanowires, of nanotubes or a glass material. According to an embodiment, the heating surface contains a transparent conductive oxide, such as for example indium tin oxide at least for a segment which requires a substantial transmittance for the beam. Alternatively or in addition thereto, the heating surface can contain a network of nanowires. The structure of nanowires can in particular include thermally and/or electrically conducting materials, such as metals. In particular, a structure containing Ag, Au nanowires can be used. These nanowires can be embedded in a resin so to enhance thermal conductivity of such a resin. According to another variant, an intelligent mobile accurate thermo-electrical device, also known as IMAT can be used as a heating surface. Such an IMAT heating surface comprises a conductive transparent heater. A material employed for such an IMAT heating surface can be carbon nanotube. A thin, lightweight, transparent heating surface can be obtained. The surface may be stretchable or flexible, thus may be adaptive to variable geometrical dimensions of the solid article and the raw material container to be used. Conductive films made with carbon nanotubes and metal nanowires, in addition to their low sheet resistance, possess an optical transmittance in the visible spectrum and can form electrically conductive, yet almost completely transparent films, measuring only about 50-100 nanometers thick. The conductive film can be placed on a glass or plastics substrate, such as a PET or polycarbonate substrate.

According to an embodiment, the heating surface can include a glass material, in particular one of the group of magnesium fluoride (MgF₂), a sapphire, a calcium fluoride (CaF₂), barium fluoride (BaF₂), zinc selenide (ZnSe), silicon (Si), a silicon dioxide (silica, SiO₂), a borosilicate, germanium (Ge), iridium (Ir) potassium bromide (KBr), sodium chloride (NaCl) or zinc sulfide glass. The glass material can also comprise combinations of these materials, in particular, the glass can be composed of a plurality of layers of different composition, wherein at least one of the layers contains one of the group of compounds named in the previous sentence.

In particular, any of the above glass materials may be used for obtaining a high transmittance for a CO₂ laser through the heating surface. Under transmittance, it is to be understood the percentage of laser light passing through the heating surface. A transmittance of 80% or more means that at least 80% of the laser is transmitted through the heating surface. A transmittance of 90% means that at least 90% of the laser is transmitted through the heating surface. A transmittance of 95% means that at least 95% of the laser is transmitted through the heating surface. The laser can be in particular a CO₂ laser or a diode laser comprising any of the base compounds mentioned earlier.

According to an embodiment, the heating surface can comprise a conductive film, e.g. a conducting film containing any of the materials of the group of a transparent conductive oxide (TCO), a network of nanowires, nanotubes or of a glass material. The conductive film can also be placed on an elastic polymer to provide a configuration of an adjustable heating surface. According to a further embodiment, a multifilament yarn containing carbon nanotubes can be woven to form a textile or fabric heating surface. In particular the heating surface can be configured according to the publication CONDUCTIVE TRANSPARENT FILM HEATER AS ALTERNATIVE TO HEATING TABLE: TOWARDS NEW INTELLIGENT MOBILE ACCURATE THERMO-ELECTRICAL (IMAT) DEVICE FOR STRUCTURAL CONSERVATION OF PAINTINGS by Tomas Markevicius et al, published under http://www.imatproject.eu/en/pld/conductive-transparent-film-heater-as-alternative-to-heating-table-towards-new-intelligent-mobile-accurate-thermo-electrical-imat-device-for-structural-conservation-of-paintings/23.

According to an embodiment, the heating device comprises an upper surface extending in substantially opposite direction with respect to the heating surface. The upper surface can comprise an anti-reflective coating, such that the beam can pass the heating device without being reflected by the upper surface.

According to an embodiment, the heating device comprises an upper and lower surface whereby the heating surface is sandwiched between the upper and the lower surface. The upper and lower surfaces can comprise an anti-reflective coating or layer, such that the beam can pass the heating device without being reflected by the upper and lower surfaces.

According to an embodiment, a heating device can be provided which comprises a heating surface and heated surface. The heated surface can be heated by the heating surface. The heated surface can be provided between the heating surface and the pre-heated raw material surface. The heated surface receives thermal energy from the heating surface, whereby the temperature of the heated surface increases. In other words, the heated surface is passively heated. The heated surface can be in contact with the raw material surface and transmits the thermal energy received from the heating surface to the raw material surface to form a pre-heated raw material surface which is suitable for generating a layer of a solid article by application of a beam onto a selected portion of the pre-heated raw material surface. The heated surface may or may not be transmissible to the beam, in particular the energy beam, for instance laser light. If not, it is placed outside the beam path.

According to an embodiment, a compression force can be applied onto the raw material by pressing the raw material surface against a pressurizing device. In other words, the raw material is compressible by a pressurizing device. The pressurizing device can be arranged in the raw material supply unit and/or in the heating device. In particular, the pressurizing device can comprise the heating surface. In case a pressure is to be applied onto the raw material by the pressurizing device, the heating surface is pressed upon the surface of the raw material to generate a pre-compressed pre-heated raw material surface. The pressurizing device can include at least one of the heating surface or the heating device.

The raw material has been compressed also in the prior art to improve the mechanical properties of a solid article manufactured by an additive manufacturing method. In particular, an aim is to reduce porosity of a powder raw material. According to a prior art solution, as disclosed in the publication "Effect of Powder Compaction in Plastic Laser Sintering Fabrication" by Niino, Toshiki et al. in 2009 published under http://sffsymposium.engr.utexas.edu/Manuscripts/2009/2009-18-Niino.pdf the powder is compressed by a rotating roller which is used to apply a new powder layer. However, a disadvantage reported with prior art compression of raw material are defects in the surface of the powder layer. The compression of the prior art raw material is performed before the laser sintering. Thus, a powder with resilient properties is likely to expand at least to some extent once the pressure from the roller is removed. Due to the difficulty in predicting the extent of the expansion of the powder, it can be difficult to predict the mechanical properties of the solid article. By a pressurizing device as disclosed above such prior art disadvantages may surprisingly be removed, due to the fact, that a pressure can be applied uniformly over the pre-heated raw material surface to form a pre-heated pre-compressed raw material surface.

According to an embodiment, the raw material comprises a powder. The powder can contain a polymer, in particular a polyamide with a surface melting temperature greater than 170 degrees Celsius at ambient pressure conditions, which undergoes a sintering process upon exposure to the laser beam. The powder can contain one compound of the group of a polycarbonate (PC), a polymethylmethacrylate (PMMA), a polystyrene (PS), a high-density polyethylene (PE-HD), a polyamide (PA) or a polyaryletherketone (PEEK). In particular, the powder can contain one of the compounds of the group of a PA11 or PA12 or PEEK. The powder can contain pigments or other additives in particular for enhancing light absorption. The powder can in particular contain carbon black. Furthermore, the powder can contain a metal, e.g. aluminum. The powder can contain a ceramics material. The powder can contain at least one of a biological material, a material generated from renewable resources, or an edible material.

The additive manufacturing device according to any of the preceding embodiments can be used for manufacturing a solid article, in particular a solid polymeric article.

The polymer can comprise at least one element of the group of polyurethane (PUR), polyethylene (PE), polypropylene (PP), polyoxymethylene (POM), polymethacrylate, polymethylmethacrylate (PMMA), polyamide, polyolefin, polystyrene, styrene co-polymer, polycarbonate, polysulfone, polyethersulfone, polyketone, polyimide, polyetherketone, polyetheretherketone (PEEK), polyphenylensulfide, polyester, polyethylene terephthalate (PET), polyethylene naphthalate (PEN), polybutylene terephthalate (PBT), polyethylene oxide, cyclic olefinic polymer, polymers containing fluor, such as polyvinylidene fluoride (PVDF), or polytetrafluoroethylene (PTFE), silicone, polylactide, thermoplastic elastomers.

The polymer can comprise an absorbing additive, such as silicon dioxide, titanium dioxide, calcium carbonate, aluminum oxide, carbon black, color agents.

The polymer may comprise a laser-sensitive additive, such as indium oxide, tin oxide, indium-tin oxide or antimony-tin oxide or lanthanum hexaboride. In particular, the laser sensitive additive can comprise nano particles of at least one of the additives mentioned above. A nano particle is characterized by a particle size of less than 1 micrometer. In particular, the particle size of the nano particle can be 1 up to and including 500 nanometers. The nanoparticles can comprise about 0.0001 to 0.1 weight percent of the polymer. The polymer can contain borides to improve laser welding capability.

According to an embodiment, the beam generation unit is movable. Thereby the position of the beam on the directing unit can be varied. The movement of the beam generation unit can be controlled by the control unit. In particular, the control unit can control the movement of the beam generation unit in accordance with a model of the solid article stored in a storage unit. The dimensions of the model of the solid article are transformed into a path of motion of the beam generation unit. Thereby the position of beam on the directing unit is varied which results in a variation of the position of the deflected beam on the raw material surface or the preheated raw material surface.

According to an embodiment, the directing unit is movable. The beam generation unit can remain in a fixed position or can be movable together with or independently of the directing unit. The movement of the directing unit can be controlled by the control unit. In particular, the control unit can control the movement of the directing unit in accordance with a model of the solid article stored in a storage unit. The dimensions of the model of the solid article are transformed into a path of motion of the directing unit. Thereby the position of beam on the directing unit is varied which results in a variation of the position of the deflected beam on the raw material surface or the preheated raw material surface.

According to an embodiment the directing unit comprises a first redirection element and a second redirection element. In particular, at least one of the first redirection element and the second redirection element is movable. The directing unit can comprise a mirror of polygonal shape, i.e. a polygonal mirror. The polygon can be a hexagon or any polygon with more two faces. The mirror of polygonal shape can be rotatable. Thereby the position of the beam on the second redirection element can be changed, which results in a variation of the position of the deflected beam on the raw material surface or the preheated raw material surface. At least one optical element, such as a lens, can be foreseen in the path of the beam between the beam generation unit and the directing unit. Furthermore, one or more optical elements can be provided in the path of the beam from the second redirection element to the heating element and/or the raw material surface.

Furthermore, the objective problem of the invention is solved by a method for operating an additive manufacturing device for manufacturing a solid article by an additive manufacturing method. For performing the method an additive manufacturing device is used, which comprises a beam generation unit, a raw material supply unit, a raw material container containing a raw material and having a raw material surface forming a first layer which can be exposed to a beam emitted by the beam generation unit and heat source for heating the raw material surface. The heat source can include a heating surface for heating the surface of the raw material in the raw material container. According to an embodiment, the material container can be configured as a heated material container. In a first step, the raw material is pre-heated by the thermal energy generated by the heating surface to from a pre-heated raw material surface. In a second step, a beam is generated by the beam generation unit. In a third step, a directing unit directs the beam emitted by the beam generation unit onto the pre-heated raw material surface. The beam is directed over the pre-heated raw material surface according to a computer-generated model of the solid article stored in a storage unit associated with a control unit for controlling the operation of the beam generation unit. The beam is directed through the heating surface onto the pre-heated raw material surface such that a first solid layer portion of the solid article is obtained when directing the beam onto the pre-heated raw material surface. In at least one subsequent step, a second layer of the raw material is supplied from the raw material supply unit and deposited on top of the first layer. In at least one optional further subsequent step, the operations performed in the previous steps are repeated, until the solid article is obtained.

By directing the beam onto the pre-heated raw material surface the raw material can be sintered or melted in at least in a region covered by a spot of the pre-heated raw material surface exposed to the beam. The melted or sintered region is subsequently solidified, whereby subsequently means after termination of the exposure of the region to the beam. The temperature homogenization box is arranged between the beam generation unit and the raw material surface, such that the beam passes through a channel formed by the wall of the temperature homogenization box. The temperature homogenization box can be removed after the solid article has been generated. The raw material container containing the solid article can be extracted together with the raw material container and the remaining raw material. Alternatively, the solid article may be extracted from the raw material container without removing the raw material container from the housing.

If the temperature homogenization box is attached to a door, the temperature homogenization box is moved away from its position above the raw material surface when the door is opened. Thereby the operator is not required to detach or to lift the temperature homogenization box. When the door swings open, the temperature homogenization box remaining attached to the door is swung out of its position. The raw material container and/or the solid article are therefore easily accessible to the operator.

The angle of the beam relative to the raw material surface or the pre-heated raw material surface is 90 degrees with a deviation of not more than 20 degrees, advantageously not more than 10 degrees, most preferred not more than 5 degrees.

According to a method variant the beam supplied by the beam generation unit is moved across the raw material surface by moving the beam generation unit. According to a method variant the beam supplied by the beam generation unit is moved across the raw material surface by moving the directing unit.

According to a method variant the beam supplied by the beam generation unit is moved across the raw material surface by moving the directing unit and the beam generation unit.

According to any of the preceding variants, the control unit can control the movement of the beam generation unit and/or the directing unit in accordance with a model of the solid article stored in a storage unit. The dimensions of the model of the solid article are transformed into a path of motion of the beam generation unit and/or the directing unit. Thereby the position of beam on the directing unit is varied which results in a variation of the position of the deflected beam on the raw material surface or the preheated raw material surface.

The beam can be exposed for a period of less than a millisecond at a spot and subsequently directed to an adjacent spot for sintering or melting the pre-heated raw material surface at the adjacent spot. In particular, the beam proceeds at a speed of at least 500 mm/s, in particular at least 1000 mm/s, preferably at least 1800 mm/s, particularly preferred at least 10000 mm/s over the pre-heated raw material surface. In particular, the temperature at the spot is at least 0.5 °C above the temperature of the pre-heated raw material surface.

According to an embodiment, the raw material contains a powder. By directing the beam onto the pre-heated raw material surface the raw material can be sintered or melted at least in a region covered by the spot of the pre-heated raw material surface exposed to the beam.

According to another embodiment, the raw material can be liquid or a slurry. By directing the beam onto the pre-heated raw material surface the raw material can be solidified at least in a region covered by the spot of the pre-heated raw material surface exposed to the beam. In particular, a chemical reaction can be initiated by exposing the pre-heated raw material to the beam.

According to an embodiment, the beam is exposed for a period of less than a second at a spot and subsequently directed to an adjacent spot for sintering or solidifying the pre-heated raw material surface at the adjacent spot.

Advantageously, the temperature at the spot is at least 0.5 °C above the temperature of the pre-heated raw material surface. Thereby a solidification, a melting or a sintering process can take place, which at least partially creates a bond between adjacent particles to form a solid surface to generate a solid article within the raw material.

The heating device according to any of the embodiments is thus suitable for an additive manufacturing application, in particular of a selective laser sintering application. Advantageously the temperature of the raw material surface, in particular the powder bed serving as a source for modelling the solid article can be kept substantially uniform over the entire surface of the raw material surface. The additive manufacturing device according to any of the embodiments thus works with a precise raw material surface temperature having a temperature variation with respect to the target temperature of not more than +/- 3 degrees Celsius, preferably not more than +/- 2 degrees Celsius, particularly preferred not more than +/- 1 degrees Celsius.

Thereby, the quality of the solid article can be improved in an unexpected and thus surprising manner and the characteristics of the solid article become more predictable. Consequently, it is possible to dispense with the individual tests which are currently required for each manufactured solid article to ensure that the solid article meets the required specifications if manufactured according to any of the prior art methods currently available.

If the term «for instance» is used in the following description, the term relates to embodiments or examples, which is not to construed as a more preferred application of the teaching of the invention. The terms "preferably" or "preferred" are to be understood such that they relate to an example from a number of embodiments and/or examples which is not to construed as a more preferred application of the teaching of the invention. Accordingly, the terms "for example", "preferably" or "preferred" may relate to a plurality of embodiments and/or examples.

The subsequent detailed description contains different embodiments of the device according to the invention. The device can be manufactured in different sizes making use of different materials, such that the reference to a specific size or a specific material is to be considered to be merely exemplary. In the description, the terms «contain», «comprise», «are configured as» in relation to any technical feature are thus to be understood that they contain the respective feature, but are not limited to embodiments containing only this respective feature.

A number of embodiments of the invention are shown in the subsequent drawings. It is shown in
Fig. 1 a section through an additive manufacturing device including a temperature homogenization box,
Fig. 2 a temperature homogenization box according to a first embodiment of the invention,
Fig. 3 a temperature homogenization box according to a second embodiment of the invention,
Fig. 4 a temperature homogenization box according to a third embodiment of the invention,
Fig. 5 a temperature homogenization box according to a fourth embodiment of the invention,
Fig. 6 a temperature homogenization box according to a fifth embodiment of the invention.

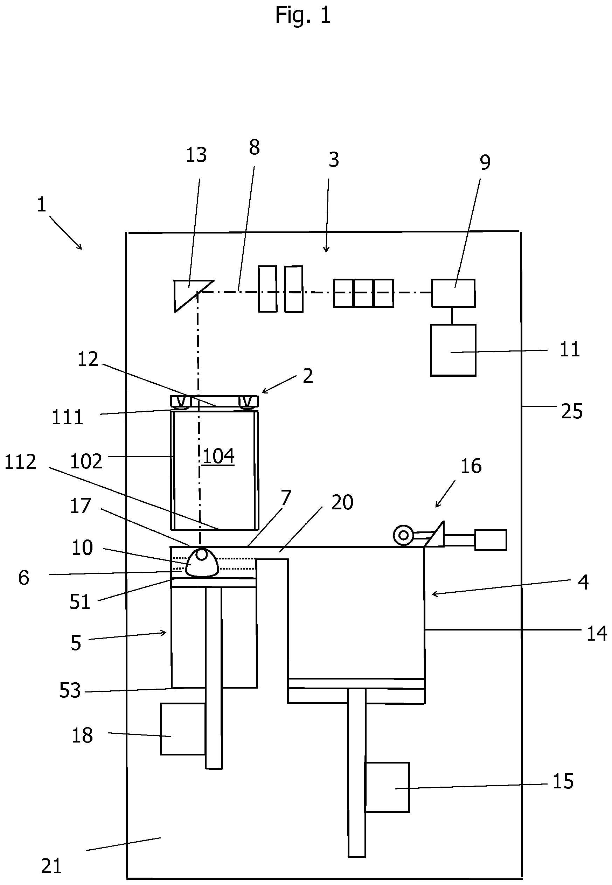

Fig. 1 shows an additive manufacturing device 1 comprising a temperature homogenization box 100.

Th additive manufacturing device 1 is shown in section. The additive manufacturing device 1 can include a heat source 2 for heating a raw material 6 provided in a raw material container 5. A solid article 10 is generated in an additive manufacturing sequence in the raw material container 5 of the additive manufacturing device 1. The additive manufacturing device 1 comprises an energy beam generation unit 3, in particular a diode laser generation unit. A raw material supply unit 4 is provided for supplying raw material to the raw material container 5 containing a raw material 6.

The raw material 6 has a raw material surface 7 exposed to an energy beam 8 emitted by the energy beam generation unit 3 when in operation. The energy beam 8 is directed onto the raw material surface 7. The raw material 6 is heated at the raw material surface 7 in any location which is hit by the energy beam 8. The energy beam 8 usually melts the raw material 6 at the raw material surface 7 whereby a coherent structure is formed at the portion of the raw material which is impinged by the energy beam 8. This coherent structure solidifies as soon as the energy beam 8 is redirected onto another location or spot of the raw material surface. The coherent structure adheres also to any structure present below the raw material surface in a previously applied layer of raw material 6.

The operation of the energy beam is controlled by a control unit 9. The energy beam generation unit 3 is disposed with a directing unit 13 to direct the energy beam 8 onto the raw material surface 7 according to a computer-generated model of the solid article 10 stored in a storage unit 11 associated with the control unit 9. Thereby the operation of the directing unit 13 is controlled by the control unit 9. The energy beam 8 generated by the energy beam generation unit 3 passes through the heating surface 12 onto the raw material surface 7. Thus, the energy beam 8 traverses the heating surface 12 of the heat source 2. In particular, the heating surface 12 is transparent for an energy beam e.g. of a diode laser. Advantageously the heating surface 12 is transparent for light of a wavelength in a range of 100 nm up to and including 1 mm.

The generation of a solid article 10 by an additive manufacturing method in the additive manufacturing device 1 involves the following steps. The raw material 6 is supplied as a layer of a thickness of less than 1 mm by the raw material supply unit 4. According to a preferred embodiment, the thickness or height of the layer can be about 100 µm. The raw material supply unit 4 can include a raw material supply container 14, which is filled with raw material. The raw material supply container 14 is movable in a direction normal to the plane containing the layer of raw material 6 for manufacture of the solid article 10 by the additive manufacturing method. The raw material supply unit 4 includes a drive unit 15 for moving the bottom of the raw material supply container 14 upwardly in a stepwise manner. Thereby the raw material for a new layer of raw material to be supplied on top of the raw material surface 7 is provided. For the generation of each new raw material layer, the bottom of the raw material supply container 14 is moved upwardly in a stepwise manner, such that a volume of the raw material 6 corresponding to the thickness of a new raw material layer is supplied to the raw material chamber 20 connecting the raw material supply container 14 and the raw material container 5. The raw material chamber 20 is shown in Fig. 1 in a partially opened state. The front wall and the covering wall of the raw material chamber 20 as well as of the raw material container 5 and the raw material supply container 14 have been omitted in the drawing to show the elements of the raw material handling units comprising the raw material supply unit 4 and the raw material container 5 in section. If the bottom of the raw material supply container 14 is moved stepwise upwardly by a distance corresponding to a raw material layer, the raw material 6 for this new raw material layer is provided to the raw material chamber 20. The raw material 6 is distributed on the surface of the first or previous layer for which the additive manufacturing method has already been completed. A raw material distribution unit 16 is provided for distributing the raw material 6 from the raw material supply container 14 to the raw material chamber 20 and to the raw material container 5. The raw material container 5 is also disposed with a drive unit 18 to lower the bottom surface 51 thereof stepwise. The bottom surface 51 is thus movable relatively to the chamber bottom 53 of the raw material container 5.

The raw material distribution unit 16 can be in particular be configured as a roller or as a sliding element or a combination thereof. The raw material distribution unit 16 can perform a sliding or rolling movement along the chamber bottom of the raw material chamber 20. The raw material distribution unit 16 thereby pushes the volume of raw material supplied for generation of the second or subsequent layer to the raw material container 5. The bottom surface 51 of the raw material container 5 is also movable in a direction normal to the chamber bottom 53 of the raw material container 5 or the raw material chamber 20. In particular, the drive unit 18 can be actuated to allow the bottom surface 51 of the raw material container 5 to move away, according to the arrangement shown in Fig. 1 downwardly, from the chamber bottom 53 of the raw material container 5.

The heat source 2 includes a heating surface 12 to provide thermal energy to the raw material surface 7 to form a pre-heated raw material surface 17. The heat source 2 can be of a circular or rectangular cross-section in particular corresponding to the cross-section of the raw material container. The raw material container 5 can also be of circular or rectangular cross-section. The heat source 2 can contain an annular heating surface 12 or a heating surface 12 of rectangular cross-section. The heating surface 12 can be transparent to the energy beam 8, thereby the energy beam 8 passes through the heating surface 12. The heating surface 12 can contain at least one of a radiation heater or a resistance heater. The energy beam 8 generated and emitted by the energy beam generation unit 3 is directed by the directing unit 13 onto the pre-heated raw material surface 17.

The temperature homogenization box 10 comprises a wall 102 which delimits a channel 104 such that the channel 104 is laterally at least partially enclosed by the wall 102. The wall 102 has a first wall edge 111 and a second wall edge 112, whereby in the operative state, the second wall edge 112 is configured to face the raw material surface 7 of the raw material container 5.

The additive manufacturing device 1 comprises a housing 25, whereby the temperature homogenization box 100 is attachable to the housing 25. The housing 25 can comprise a door which is not shown in the drawings. The door can form one of the side walls of the housing 25 or the ceiling or can comprise a portion of the side walls or the ceiling. The housing can have substantially cubical shape.

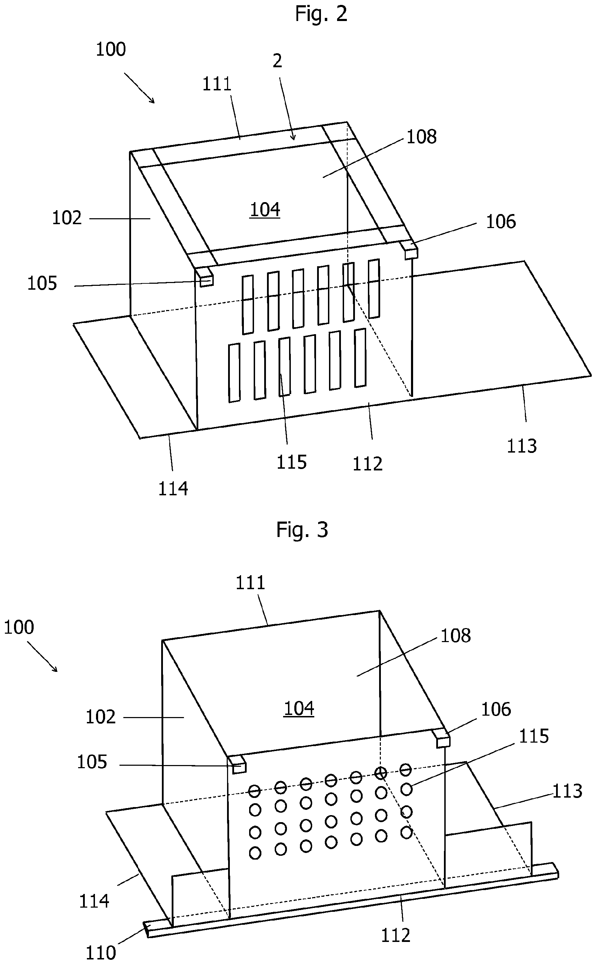

Fig. 2 shows a temperature homogenization box 100 according to a first embodiment comprising a wall 102 which is configured as four side walls forming a structure of cubical shape. A channel 104 is formed by the wall 102 which separates this channel from the remaining internal space provided inside the housing 25 of the additive manufacturing device. In fig. 2 the housing 25 is omitted. The wall 102 has a first wall edge 111 and a second wall edge 112, whereby in the operative state, the second wall edge 112 is configured to face the raw material surface 7 of the raw material container 5 of the additive manufacturing device 1.

The wall 102 extends from a first wall edge 111 to a second wall edge 112. An attachment element 105, 106 can be provided on the wall 102. The attachment element 105, 106 can be configured as a hook. The attachment element 105, 106 can engage with a counter element or an opening in the housing 25, so as to be guided through such an opening or to be engaged with the counter element so as to be fixed at least temporarily to the housing 25. The housing can comprise a door and the attachment element 105, 106 can engage with a counter element or an opening of the door.

A heat source 2 can be attached to the first wall edge 111. The heat source 2 can comprise a heating element. The heating element can comprise one element of the group of resistance heaters, IR heaters. The heating element is not shown in fig. 2. The heating element can be disposed in a circumferential configuration around an opening or a laser transmissive surface 108. The laser transmissive surface can be configured as a heating element. According to the embodiment of fig. 2, the temperature homogenization box 100 is configured to receive the heat source 2 whereby the heat generated by the heat source 2 is transferred to the cross-sectional area delimited by the second wall edges 112 such that a homogeneous temperature distribution in the cross-sectional area is obtained.

At least a portion of the wall can comprise an aperture 115 which allows for a visual inspection of the raw material chamber 6 during an additive manufacturing process. A plurality of apertures 115 can be provided, for instance in the shape of slits.

A wing element 113, 114 can extend from the second wall edge 112 in a direction substantially normal with respect to the wall 102. The wing elements 113, 114 cover the raw material chamber 20 and/or the raw material supply container 14. Any air draft inside the housing can be interrupted by the wing elements 113, 114. In particular the entry of cold or cool air into the channel 104 can be prevented, which could result in substantial temperature inhomogenizations on the raw material surface which could lead to solid articles of inferior quality.

Fig. 3 shows a temperature homogenization box 100 according to a second embodiment of the invention, whereby the temperature homogenization box 100 is arranged between the heat source 2 and the raw material container 5. The heat source is not shown in fig. 3. The parts which have the same function as the parts in fig. 2 carry the same reference numbers and for the description it is referred to fig. 2. The apertures 115 are shaped as holes of circular or oval cross-section.

Fig. 3 further shows an example of a sealing element 110. The sealing element 110 is attached to the wing elements 113, 114 and/or to the second wall edge 112. The sealing element 110 is used for providing a seal between the wall of the housing 25 and the temperature homogenization box 100. The wall of the housing 25 is not shown as it would obstruct the view to the interior.

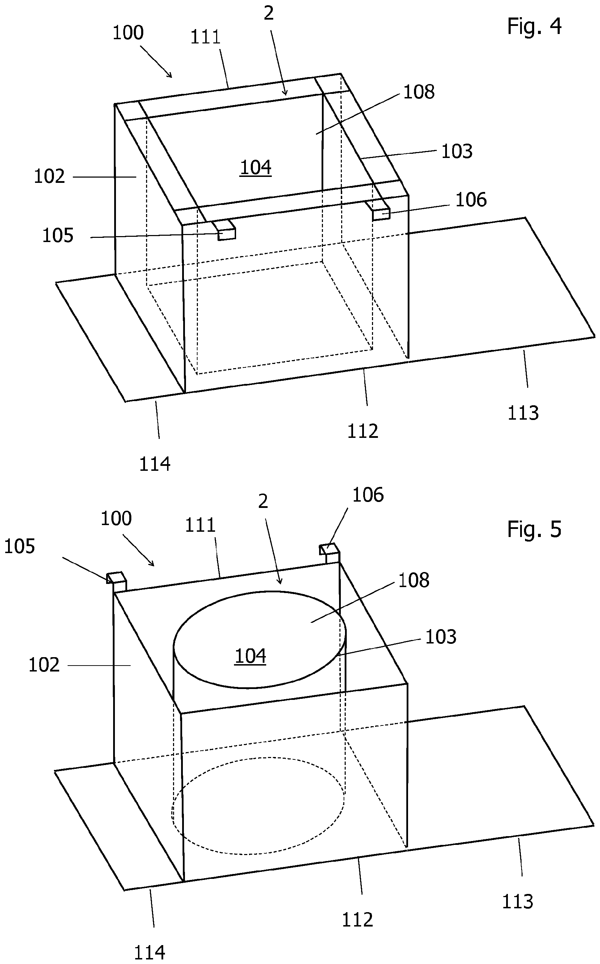

Fig. 4 shows a temperature homogenization box 100 according to a third embodiment of the invention, whereby the temperature homogenization box 100 is arranged between the heat source 2 and the raw material container 5. The heat source is not shown in fig. 4. The parts which have the same function as the parts in fig. 2 or fig. 3 carry the same reference numbers and for the description it is referred to fig. 2. This embodiment doesn't contain any apertures. The temperature homogenization box 100 is disposed with an inner wall 103, which is arranged substantially parallel to the wall 102. The space between the wall 102 and the inner wall 103 can contain an insulating material, it can also contain air or even a vacuum. Any heat transfer from the heat source through the walls of the temperature homogenization box 100 can be thereby considerably reduced with respect to the previous embodiments.

Fig. 5 shows a temperature homogenization box 100 according to a fourth embodiment of the invention, whereby the temperature homogenization box 100 is arranged between the heat source 2 and the raw material container 5. The heat source is not shown in fig. 5. The parts which have the same function as the parts in fig. 2, fig. 3 or fig. 4 carry the same reference numbers and for the description it is referred to fig. 2. This embodiment doesn't contain any apertures in the wall 103. The temperature homogenization box 100 is disposed with an inner wall 103, which forms an oval or circular cross-section. The wall 103 is thus in particular of cylindrical shape. The space between the wall 102 and the inner wall 103 can contain an insulating material, it can also contain air or even a vacuum. Any heat transfer from the heat source through the walls of the temperature homogenization box 100 can be thereby considerably reduced with respect to the previous embodiments. This embodiment is advantageously used in combination with a raw material container 5 of a shape corresponding to the inner wall 103, for instance a cylindrical raw material container 5.

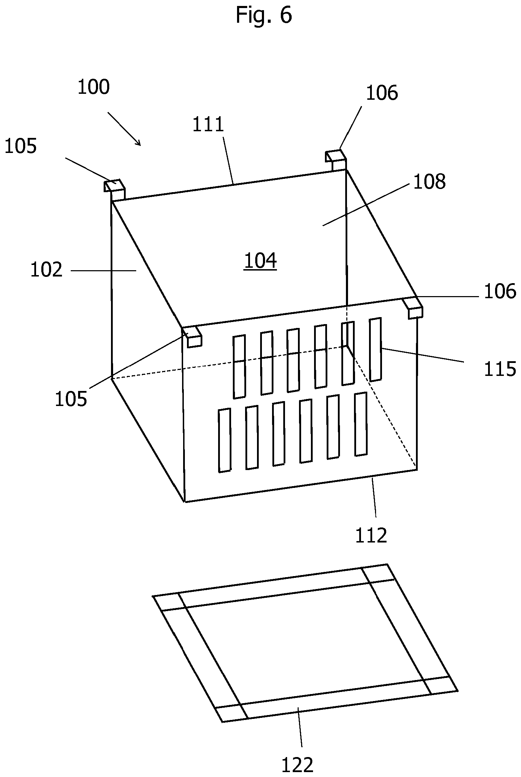

Fig. 6 shows a temperature homogenization box 100 according to a fifth embodiment of the invention, whereby the temperature homogenization box 100 is arranged between the heat source 2 and the raw material container 5. The heat source 2 is not shown in fig. 6. The parts which have the same function as the parts in fig. 2, fig. 3, fig. 4 or fig. 5 carry the same reference numbers and for the description it is referred to fig. 2. The wall 102 is not disposed with wing elements 113, 114. A heat source 122 is disposed between the second wall edges 112 and the raw material surface 7. The heat source 2 can according to an embodiment be omitted, what is not shown in the drawings. The heat source 122 can in particular be transparent for the energy beam.

Fig. 6 further shows attachment elements 105, 106 which are configured to be attached to two side walls of a housing 25, which is omitted in this view. The housing according to this embodiment may comprise a slidable door. Alternatively, the raw material container 5 and the raw material supply container 4 may be accessed from the top or bottom of the housing 25. The temperature homogenization box 100 may be removed entirely from the housing 25 prior to extracting a solid article 10 after termination of the additive manufacturing process or for refilling or emptying the raw material container 5 or the raw material supply unit.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of an element or compound selected from the group consisting of A, B, C .... and N, the text should be interpreted as requiring only one element from the group, not A plus N, or B plus N, etc.

## Claims

1. An additive manufacturing device (1) for manufacturing a solid article (10), comprising an energy beam generation unit (3), a raw material supply unit (4), a raw material container (5) containing a raw material (6) including a raw material surface (7) exposed to an energy beam (8) to be emitted by the energy beam generation unit (3) in operation, wherein the heat source (2) includes a heating surface (12) for heating the raw material surface (7) to form a pre-heated raw material surface (17), wherein the energy beam generation unit (3) is disposed with a directing unit (13) to direct the energy beam (8) onto the pre-heated raw material surface (17), wherein the pre-heated raw material surface (17) forms the upper surface of an uppermost layer of raw material (6), such that the uppermost layer of raw material (6) is transformed into a coherent sub-structure in the spots exposed to the energy beam (8) such that the solid article (10) is formable by the coherent structure formable from each sub-structure in each of the plurality layers of raw material including the uppermost layer of raw material (6), **characterized in that** a temperature homogenization box (100) is arranged between the energy beam generation unit (3) and the raw material container (5) when the additive manufacturing device (1) is in operation, wherein the additive manufacturing device (1) comprises a housing (25), wherein the temperature homogenization box (100) is located inside the housing (25).

2. The device of claim 1, wherein the temperature homogenization box (100) comprises a wall (102) which delimits a channel (104) such that the channel (104) is at least partially enclosed laterally by the wall (102).

3. The device of claim 2, wherein the channel (104) comprises a cross-sectional surface which corresponds to the cross-sectional surface of the raw material container (5).

4. The device of any of the preceding claims 2 or 3, wherein the channel (104) is free from any insert elements.

5. The device of one of the preceding claims, wherein the temperature homogenization box (100) is attachable to the housing (25) or the housing (25) comprises a door, wherein the temperature homogenization box (100) is attachable to the door, wherein the temperature homogenization box (100) includes an attachment element (105, 106).

6. The device of one of the preceding claims 2 to 5, wherein the wall (102) has a first wall edge (111) and a second wall edge (112), wherein in the operative state, the second wall edge (112) is configured to face the raw material surface (7) of the raw material container (5).

7. The device of claim 6, wherein the temperature homogenization box (100) is configured to receive the heat source (2) wherein the heat generated by the heat source (2) is transferred to the cross-sectional area delimited by the second wall edge (112) such that a homogeneous temperature distribution in the cross-sectional area is obtained.

8. The device of one of the preceding claims, wherein the temperature homogenization box (100) is arranged between the heat source (2) and the raw material container (5) or wherein the heat source (2) or a further heat source is disposed between the temperature homogenization box (100) and the raw material surface (7).

9. The device of claim 7, wherein the homogeneous temperature distribution in the cross-sectional area delimited by the second wall edge (112) is transferred to the cross-sectional surface of the raw material surface (7) arranged below the second wall edge (112).

10. The device of claim 9, wherein the temperature difference between the maximal temperature on the cross-sectional surface and the minimal temperature on the cross-sectional surface amounts to not more than 15 degrees Celsius.

11. The device of one of the preceding claims 2 to 10, wherein at least one of the walls (102) of the temperature homogenization box comprises an aperture (115).

12. The device of one of the preceding claims 2 to 11, wherein at least one of the walls (102) of the temperature homogenization box (100) is disposed with a wing element (113, 114).

13. The device of one of the preceding claims 2 to 12, wherein least one of the walls (102) of the temperature homogenization box (100) is disposed with a sealing element (110).

14. The device of one of the preceding claims 2 to 13, wherein an inner wall (103) is arranged inside the wall (102).

15. The device according to one of the preceding claims, wherein the temperature homogenization box comprises an insulation.

## Patentansprüche

1. Additive Fertigungsvorrichtung (1) zur Herstellung eines festen Gegenstands (10), umfassend eine Energiestrahlerzeugungseinheit (3), eine Rohstoffversorgungseinheit (4), einen Rohstoffbehälter (5), der einen Rohstoff (6) sowie eine Rohmaterialoberfläche (7) enthält, welche einem Energiestrahl (8) ausgesetzt ist, der von der Energiestrahlerzeugungseinheit (3) im Betriebszustand emittiert wird, wobei die Wärmequelle (2) eine Heizfläche (12) zum Erwärmen der Rohmaterialoberfläche (7) enthält, um eine vorgewärmte Rohmaterialoberfläche (17) auszubilden, wobei die Energiestrahlerzeugungseinheit (3) eine Richteinheit (13) enthält, um den Energiestrahl (8) auf die vorgewärmte Rohmaterialoberfläche (17) zu lenken, wobei die vorgewärmte Rohmaterialoberfläche (17) die Oberseite einer obersten Rohmaterialschicht (6) ausbildet, sodass die oberste Rohmaterialschicht (6) in eine kohärente Substruktur in den Punkten, die dem Energiestrahl (8) ausgesetzt sind, umgewandelt wird, sodass der feste Gegenstand (10) durch die kohärente Struktur, die aus jeder Substruktur gebildet werden kann, formbar ist, wobei jede Substruktur in jeder der mehreren Rohmaterialschichten einschließlich der obersten Rohmaterialschicht (6) erzeugbar ist, **dadurch gekennzeichnet, dass** eine Temperaturhomogenisierungsbox (100) zwischen der Energiestrahlerzeugungseinheit (3) und dem Rohmaterialbehälter (5) angeordnet ist, wenn die additive Fertigungsvorrichtung (1) in Betrieb ist, wobei die additive Fertigungsvorrichtung (1) ein Gehäuse (25) umfasst, wobei sich die Temperaturhomogenisierungsbox (100) innerhalb des Gehäuses (25) befindet.

2. Die Vorrichtung nach Anspruch 1, wobei die Temperaturhomogenisierungsbox (100) eine Wand (102) umfasst, die einen Kanal (104) derart begrenzt, dass der Kanal (104) zumindest teilweise seitlich von der Wand (102) umschlossen ist.

3. Die Vorrichtung nach Anspruch 2, wobei der Kanal (104) eine Querschnittsfläche aufweist, die der Querschnittsfläche des Rohmaterialbehälters (5) entspricht.

4. Die Vorrichtung nach einem der vorhergehenden Ansprüche 2 oder 3, wobei der Kanal (104) frei von irgendwelchen Einlageelementen ist.

5. Die Vorrichtung nach einem der vorhergehenden Ansprüche, wobei die Temperaturhomogenisierungsbox (100) an dem Gehäuse (25) angebracht werden kann oder das Gehäuse (25) eine Tür umfasst, wobei die Temperaturhomogenisierungsbox (100) an der Tür angebracht werden kann, wobei die Temperaturhomogenisierungsbox (100) ein Befestigungselement (105, 106) enthält.

6. Die Vorrichtung nach einem der vorhergehenden Ansprüche 2 bis 5, wobei die Wand (102) eine erste Wandkante (111) und eine zweite Wandkante (112) aufweist, wobei im Betriebszustand die zweite Wandkante (112) derart konfiguriert ist, dass sie der Rohmaterialoberfläche (7) des Rohmaterialbehälters (5) zugewandt ist.

7. Die Vorrichtung nach Anspruch 6, wobei die Temperaturhomogenisierungsbox (100) zur Aufnahme der Wärmequelle (2) ausgebildet ist, wobei die von der Wärmequelle (2) erzeugte Wärme auf die durch die zweite Wandkante (112) begrenzte Querschnittsfläche übertragen wird, derart, sodass eine homogene Temperaturverteilung in der Querschnittsfläche erhalten wird.

8. Die Vorrichtung nach einem der vorhergehenden Ansprüche, wobei die Temperaturhomogenisierungsbox (100) zwischen der Wärmequelle (2) und dem Rohmaterialbehälter (5) angeordnet ist oder wobei die Wärmequelle (2) oder eine weitere Wärmequelle zwischen der Temperaturhomogenisierungsbox (100) und der Rohmaterialoberfläche (7) angeordnet ist.

9. Die Vorrichtung nach Anspruch 7, wobei die homogene Temperaturverteilung in der durch die zweite Wandkante (112) begrenzten Querschnittsfläche auf die unter der zweiten Wandkante (112) angeordnete Querschnittsfläche der Rohmaterialoberfläche (7) übertragen wird.

10. Die Vorrichtung nach Anspruch 9, wobei die Temperaturdifferenz zwischen der maximalen Temperatur auf der Querschnittsfläche und der minimalen Temperatur auf der Querschnittsfläche nicht mehr als 15 Grad Celsius beträgt.

11. Die Vorrichtung nach einem der vorhergehenden Ansprüche 2 bis 10, wobei mindestens eine der Wände (102) der Temperaturhomogenisierungsbox eine Öffnung (115) enthält.

12. Die Vorrichtung nach einem der vorhergehenden Ansprüche 2 bis 11, wobei mindestens eine der Wände (102) der Temperaturhomogenisierungsbox (100) mit einem Flügelelement (113, 114) versehen ist.

13. Die Vorrichtung nach einem der vorhergehenden Ansprüche 2 bis 12, wobei mindestens eine der Wände (102) der Temperaturhomogenisierungsbox (100) mit einem Dichtungselement (110) versehen ist.

14. Die Vorrichtung nach einem der vorhergehenden Ansprüche 2 bis 13, wobei eine Innenwand (103) innerhalb der Wand (102) angeordnet ist.

15. Die Vorrichtung nach einem der vorhergehenden Ansprüche, wobei die Temperaturhomogenisierungsbox eine Isolation enthält.

## Revendications

1. Dispositif de fabrication additive (1) pour fabriquer un article solide (10), comprenant une unité de génération de faisceau d'énergie (3), une unité d'alimentation en matière première (4), un conteneur de matière première (5) contenant une matière première (6) comprenant une surface de matière première (7) exposée à un faisceau d'énergie (8) émittable par l'unité de génération de faisceau d'énergie (3) en état d'opération, dans lequel la source de chaleur (2) comprend une surface chauffante (12) pour chauffer la surface de matière première (7) pour former une surface de matière première préchauffée (17), dans laquelle l'unité de génération de faisceau d'énergie (3) est disposée avec une unité de direction (13) pour diriger le faisceau d'énergie (8) sur la surface de matière première préchauffée (17), dans laquelle la surface de matière première préchauffée (17) forme la surface supérieure d'une couche supérieure de matière première (6), de telle sorte que la couche supérieure de matière première (6) est transformée en un sous-ensemble cohérent dans les points exposés au faisceau d'énergie (8) de telle sorte que l'article solide (10) peut être formé comme un ensemble cohérent formable à partir de chaque sous-ensemble dans chacune de la pluralité de couches de matière première comprenant la couche supérieure de matière première (6), **caractérisée en ce qu'** une boîte d'homogénéisation de température (100) est disposée entre l'unité de génération de faisceau d'énergie (3) et le conteneur de matière première (5) lorsque le dispositif de fabrication additive (1) est en état d'opération, dans lequel le dispositif de fabrication additive (1) comprend un boîtier (25), dans lequel la boîte d'homogénéisation de température (100) est située à l'intérieur du boîtier (25).

2. Le dispositif selon la revendication 1, dans lequel la boîte d'homogénéisation de température (100) comprend une paroi (102) qui délimite un canal (104) de telle sorte que le canal (104) est au moins partiellement enfermé latéralement par la paroi (102).

3. Le dispositif selon la revendication 2, dans lequel le canal (104) comprend une surface de section transversale qui correspond à la surface de section transversale du conteneur de matière première (5).

4. Le dispositif selon l'une des revendications précédentes 2 ou 3, dans lequel le canal (104) est exempt de tout élément d'insertion.

5. Le dispositif selon l'une quelconque des revendications précédentes, dans lequel la boîte d'homogénéisation de température (100) peut être fixé au boîtier (25) ou le boîtier (25) comprend une porte, dans lequel la boîte d'homogénéisation de température (100) peut être fixé à la porte, dans lequel la boîte d'homogénéisation de température (100) comprend un élément de fixation (105, 106).

6. Le dispositif selon l'une des revendications précédentes 2 à 5, dans lequel la paroi (102) a un premier bord de paroi (111) et un second bord de paroi (112), dans lequel à l'état opérationnel, le second bord de paroi (112) est configuré pour faire face à la surface de matière première (7) du conteneur de matière première (5).

7. Le dispositif selon la revendication 6, dans lequel la boîte d'homogénéisation de température (100) est configurée pour recevoir la source de chaleur (2) dans laquelle la chaleur générée par la source de chaleur (2) est transférée à la zone de section transversale délimitée par le second bord de paroi (112) de manière à obtenir une répartition homogène de la température dans la section transversale.

8. Le dispositif selon l'une quelconque des revendications précédentes, dans lequel la boîte d'homogénéisation de température (100) est disposée entre la source de chaleur (2) et le conteneur de matière première (5) ou dans lequel la source de chaleur (2) ou une autre source de chaleur est disposé entre la boîte d'homogénéisation de température (100) et la surface de matière première (7).

9. Le dispositif selon la revendication 7, dans lequel la répartition homogène de la température dans la zone de section transversale délimitée par le second bord de paroi (112) est transférée à la surface de section transversale de la surface de matière première (7) disposée sous le second bord de paroi (112).

10. Le dispositif selon la revendication 9, dans lequel la différence de température entre la température maximale sur la surface de section transversale et la température minimale sur la surface de section transversale ne dépasse pas 15 degrés Celsius.

11. Le dispositif selon l'une des revendications 2 à 10 précédentes, dans lequel au moins une des parois (102) de la boîte d'homogénéisation de température comprend une ouverture (115).

12. Le dispositif selon l'une des revendications 2 à 11 précédentes, dans lequel au moins une des parois (102) de la boîte d'homogénéisation de température (100) est disposée avec un élément d'aile (113, 114).

13. Le dispositif selon l'une des revendications 2 à 12 précédentes, dans lequel au moins une des parois (102) de la boîte d'homogénéisation de température (100) est disposée avec un élément d'étanchéité (110).

14. Le dispositif selon l'une des revendications 2 à 13 précédentes, dans lequel une paroi interne (103) est disposée à l'intérieur de la paroi (102).

15. Le dispositif selon l'une quelconque des revendications précédentes, dans lequel la boîte d'homogénéisation de température comprend un isolant.
